# FASCICULE DE BREVET EUROPEEN

(11) **EP 1 615 764 B1**
(45) Date de publication et mention de la délivrance du brevet: **10.12.2008**
(21) Numéro de dépôt: 04742490.8
(22) Date de dépôt: 13.04.2004
(51) Int. Cl.: B32B 7/06, G06K 19/07

(54) **PRODUIT LAMINE AVEC ORGANE D'IDENTIFICATION ELECTRONIQUE ET DISPOSITIF D'INDENTIFICATION ET DE SUIVI DE CES PRODUITS**
LAMINIERTES PRODUKT MIT ELEKTRONISCHEM IDENTIFIKATIONSELEMENT UND IDENTIFIKATIONS- UND VERFOLGUNGSVORRICHTUNG FÜR DIE PRODUKTE
LAMINATED PRODUCT WITH AN ELECTRONIC IDENTIFICATION ELEMENT AND IDENTIFICATION AND FOLLOW-UP DEVICE FOR SAID PRODUCTS

(30) Priorité: 23.04.2003 FR 0304966
(43) Date de publication de la demande: 18.01.2006
(73) Titulaire: Gastel, Daniel André, 78370 Plaisir les Gatines (FR)
(72) Inventeur: Gastel, Daniel André, 78370 Plaisir les Gatines (FR)
(74) Mandataire: Thinat, Michel
(86) Numéro de dépôt international: PCT/FR2004/000907
(87) Numéro de publication internationale: WO 2004/096537

(56) Documents cités:
- EP-A- 0 667 233
- FR-A- 2 697 801
- FR-A- 2 800 186
- FR-A- 2 812 126
- US-A- 4 526 641
- US-B1- 6 482 287

## Description

L'invention concerne en général les produits laminés et le suivi de ces produits.

Plus précisément, l'invention concerne, selon un premier aspect, un produit laminé présentant une épaisseur réglable par délitage, ce produit comprenant un empilement alterné de feuilles et de couches d'un matériau adhésif, chaque feuille présentant une résistance intrinsèque au déchirement, et chaque couche de matériau adhésif reliant l'une à l'autre deux feuilles adjacentes de l'empilement par une force de liaison plus faible que la résistance des feuilles au déchirement, ce dont il résulte que chaque feuille peut être détachée de l'empilement sans se déchirer.

Des produits de ce type sont connus de l'art antérieur, et sont notamment utilisés comme cales de réglage pour des ensembles mécaniques. Ces ensembles présentent généralement des jeux importants en certains points, résultant de la combinaison des tolérances de fabrication. Ces jeux sont compensés en insérant des cales.

L'épaisseur de ces cales est ajustée en retirant les feuilles supérieures ou inférieures une à une, jusqu'à ce que l'épaisseur recherchée soit atteinte.

Ces cales sont notamment utilisées dans des industries où une traçabilité complète de toutes les pièces est exigée, pour des raisons de sécurité ou d'assurance qualité. C'est le cas par exemple de l'aéronautique. Chaque pièce constituant un aéronef est numérotée et un dossier d'assurance qualité lui est associé, comprenant les plans de fabrication, ou au moins leurs références, les certificats matières, les références des spécifications de fabrication, etc...

Les numéros de série des cales pelables sont généralement marquées à l'encre indélébile par un tampon, sur la face supérieure de la cale, au moment de la fabrication.

Cette technique présente plusieurs défauts.

Les feuilles supérieures de la cale, portant le numéro de série, sont enlevées pendant l'opération d'ajustement de l'épaisseur de la cale. Une fois cette opération effectuée, la cale n'est plus identifiable. Elle peut être perdue, ou interchangée par erreur avec une autre entre le moment auquel son épaisseur est ajustée et le moment auquel elle est mise en place.

De plus, le marquage est difficilement lisible sur certains types de cales, comme par exemple les cales en matériau composite, qui présentent une surface inadaptée au tamponage, lisse ou tramée suivant les matériaux.

Enfin, les cales étant généralement de petites tailles, le volume d'informations qu'il est possible de marquer sur la cale est très faible. Il se limite généralement au numéro de série de la cale.

Dans ce contexte, la présente invention a pour but de pallier les défauts mentionnés ci-dessus.

A cette fin, le produit de l'invention, par ailleurs conforme à la définition générique qu'en donne le préambule ci-dessus, est essentiellement caractérisé en ce qu'il comprend un logement ménagé dans l'épaisseur de l'empilement, et un organe électronique d'identification disposé dans le logement.

Dans un mode de réalisation possible de l'invention, l'organe électronique comprend une mémoire de stockage d'informations d'identification identifiant ou caractérisant le produit, et un dispositif de transmission interrogeable à distance apte à transmettre les informations d'identification stockées dans la mémoire.

Avantageusement, les informations d'identification stockées dans la mémoire comprennent au moins le numéro de série du produit.

De préférence, la mémoire présente une grande capacité de stockage, suffisante pour stocker au moins une grande partie des informations d'identification, telles que : identification du fabricant du produit, type de produit, référence de la commande, identification du client, identification de la matière constituant le produit et référence du certificat matière, référence de la norme applicable à la fabrication du produit, référence des spécifications techniques du produit, référence du certificat de conformité, date de fabrication, référence du bordereau de livraison, date de livraison.

Par exemple, la mémoire présente une capacité de stockage d'au moins 512 bits.

Avantageusement, certaines des informations d'identification sont stockées dans la mémoire sous forme codée.

De préférence, le dispositif de transmission est apte à recevoir à distance des informations d'identification et à les inscrire dans la mémoire.

Par exemple, l'organe électronique est verrouillable en écriture.

Avantageusement, l'organe électronique présente la forme générale d'un cylindre de diamètre extérieur inférieur à 4 millimètres.

De préférence, l'organe électronique comprend des moyens de mesure de la température et/ou de la pression et/ou des vibrations et/ou de l'irradiation, le dispositif de transmission étant apte à transmettre les résultats des mesures faites par lesdits moyens.

Par exemple, l'organe électronique d'identification présente une très faible épaisseur, la mémoire présentant une capacité de stockage suffisante pour stocker les informations d'identification essentielles, les autres informations étant stockées sur un support externe.

Avantageusement, l'organe électronique d'identification présente une épaisseur inférieure à 200 microns.

De préférence, l'organe électronique d'identification présente une section inférieure à 2,5 millimètres carrés.

Par exemple, la mémoire présente une capacité supérieure à 64 bits.

Avantageusement, l'organe électronique est utilisable en lecture seule.

De préférence, le logement est délimité par une paroi intérieure, un matériau de remplissage durcissable remplissant le logement autour de l'organe électronique et solidarisant celui-ci à la paroi intérieure.

Par exemple, le matériau de remplissage est une résine, par exemple une résine époxy, phénolique, vinylester ou polyvinylique.

Avantageusement, les feuilles sont constituées d'un matériau métallique ou composite.

De préférence, les feuilles s'étendent toutes parallèlement à un plan de référence, le logement s'étendant également parallèlement au plan de référence.

Selon un second aspect, l'invention porte sur un dispositif d'identification et de suivi de produits laminés tels que décrits ci-dessus, caractérisé en ce qu'il comprend une unité de lecture communiquant avec le dispositif de transmission de l'organe électronique, l'unité de lecture étant apte à consulter les informations d'identification stockées dans la mémoire

Par exemple, l'unité de lecture est portable et communique à distance, sans liaison filaire, avec l'organe électronique.

Avantageusement, le dispositif comprend une unité informatique de gestion des informations d'identification, l'unité de lecture étant apte à transmettre à l'unité informatique les informations lues dans la mémoire.

De préférence, l'unité de lecture est apte à transmettre à l'organe électronique les informations d'identification gérées par l'unité informatique, pour écriture dans la mémoire.

Par exemple, l'unité informatique effectue le codage et le décodage de certaines informations d'identification stockées sous forme codée dans la mémoire.

Avantageusement, le codage et le décodage des informations d'identification est effectué à l'aide de tables mettant en correspondance l'information à coder et un code alphanumérique à stocker dans la mémoire.

Enfin, selon un troisième aspect, l'invention concerne l'application d'un produit laminé tel que décrit ci-dessus à la constitution d'une cale de réglage pelable pour des ensembles mécaniques.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'un produit laminé selon un premier mode de réalisation de l'invention,
- la figure 2 est une vue en coupe de l'organe électronique d'identification selon les flèches II de la figure 1,
- les figures 3A et 3B sont des schémas de principe du dispositif de suivi des produits de l'invention, montrant respectivement l'unité de lecture communiquant avec l'unité informatique, et l'unité de lecture communiquant avec l'organe électronique d'identification, et
- la figure 4 est une vue équivalente à la figure 1, pour un second mode de réalisation de l'invention.

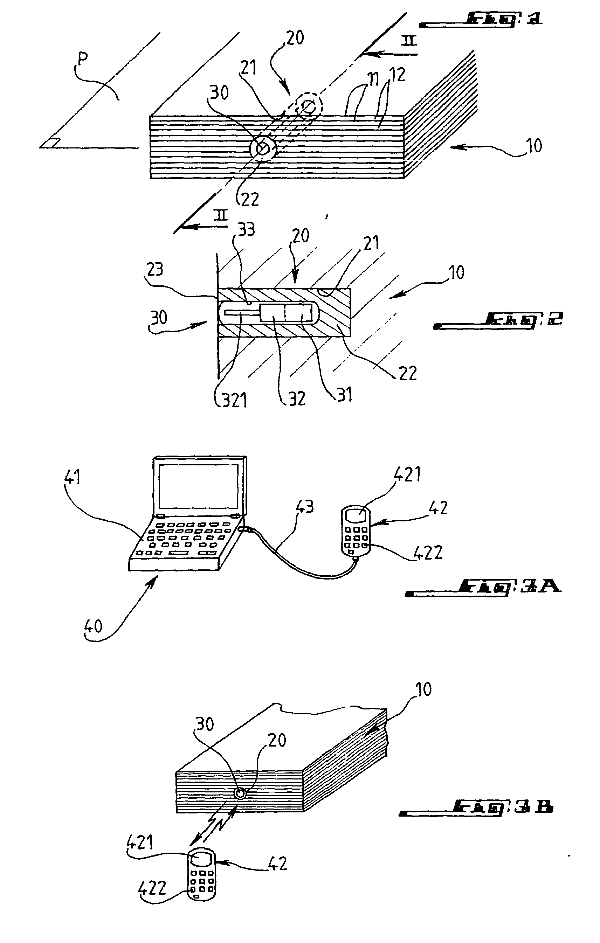

La figure 1 représente un produit laminé d'épaisseur réglable par délitage, l'épaisseur étant la dimension verticale du produit tel que représenté sur la figure 1.

Ce produit comprend un empilement 10 alterné de feuilles 11 et de couches 12 d'un matériau adhésif. Le produit est préparé à partir de feuilles 11 minces, d'épaisseur variant généralement entre 0,1 et 0,01 millimètres. Ces feuilles 11 sont enduites d'un film extrêmement mince de matériau adhésif, de l'ordre de 0,002 millimètre, et empilées. Les feuilles 11 empilées subissent ensuite un traitement consistant à leur appliquer une pression très importante tout en les soumettant à des cycles de chauffage prolongés. L'épaisseur des couches 12 de matériau adhésif est encore plus faible après traitement, cette épaisseur devenant à peine mesurable.

Chaque feuille 11 présente une résistance intrinsèque au déchirement, et chaque couche de matériau adhésif 12 relie l'une à l'autre deux feuilles 11 adjacentes de l'empilement 10 par une force de liaison plus faible que la résistance des feuilles 11 au déchirement. Il résulte que chaque feuille 11 peut être détachée de l'empilement 10 sans se déchirer. On utilise généralement un cutter pour détacher les feuilles 11.

Selon l'invention, le produit comprend un logement 20 ménagé dans l'épaisseur de l'empilement 10, et un organe électronique d'identification 30 disposé dans le logement 20.

L'organe électronique 30, appelé communément puce, comprend une mémoire 31 de stockage d'informations d'identification identifiant ou caractérisant le produit, et un dispositif de transmission 32 interrogeable à distance, apte à transmettre les informations d'identification stockées dans la mémoire 31.

Ces informations d'identification comprennent au minimum le numéro de série du produit.

Selon un premier mode de réalisation de l'invention, illustré sur les figures 1 à 3A/B, la mémoire 31 présente une grande capacité de stockage, suffisante pour stocker au moins une grande partie des informations suivantes : identification du fabricant du produit, type de produit, numéro de série du produit, référence de la commande, identification du client, identification de la matière constituant le produit et référence du certificat matière, référence de la norme applicable à la fabrication du produit, référence des spécifications techniques du produit, référence du certificat de conformité, date de fabrication, référence du bordereau de livraison, date de livraison .

La mémoire 31 présente une capacité de stockage d'au moins 512 bits, et de préférence 1024 bits, ce qui permet de stocker 108 caractères alphanumériques.

Cette capacité est suffisante pour stocker l'ensemble des informations listées ci-dessus. Certaines des informations d'identification sont stockées dans la mémoire 31 sous forme codée, comme on le verra plus loin.

Cette liste n'est pas limitative, et d'autres informations peuvent également être stockées dans la mémoire 31, dans la limite de sa capacité de stockage. Ces autres informations peuvent également venir en remplacement de certaines des informations listées ci-dessus.

Le dispositif de transmission 32 est par ailleurs apte à recevoir à distance des informations d'identification et à les transmettre à la mémoire 31, qui les stocke.

L'organe électronique 30 est verrouillable en écriture.

L'organe électronique 30 est représenté sur la figure 2. Il présente la forme générale d'un cylindre, de diamètre extérieur inférieur à 4 millimètres. Ce cylindre présente typiquement une longueur de 13,3 millimètre et un diamètre extérieur de 3,15 millimètres.

Le dispositif de transmission 32 comprend un bobinage de cuivre 321, faisant fonction d'antenne, relié électriquement à la mémoire 31.

La mémoire 31 et le dispositif de transmission 32 sont disposés à l'intérieur d'une enveloppe de verre 33 étanche et cylindrique. L'antenne 321 du dispositif de transmission 32 occupe une extrémité axiale de l'enveloppe 33.

L'organe électronique 30 fonctionne typiquement à une fréquence de 125 kiloHertz.

Comme on peut le voir sur la figure 1, les feuilles 11 s'étendent toutes parallèlement à un plan de référence P, représenté horizontal sur la figure 1. Le logement 20 s'étend de préférence parallèlement au plan de référence P, pour occuper une épaisseur du produit aussi faible que possible.

Ce logement 20 est cylindrique, borgne et débouche par une extrémité ouverte 23 sur une face latérale du produit. Il peut être réalisé très simplement, par exemple à l'aide d'une perceuse.

Il présente un diamètre intérieur légèrement supérieur au diamètre extérieur de l'enveloppe 33 de l'organe électronique 30.

L'organe électronique 30 est disposé dans le logement 20, l'axe de symétrie de l'organe électronique 30 étant parallèle à l'axe de symétrie du logement 20. L'antenne 321 du dispositif de transmission 32 est disposé du côté de l'extrémité ouverte 23 du logement 20.

Le logement 20 est délimité par une paroi intérieure 21, un matériau de remplissage 22, dur, remplissant le logement 20 autour de l'organe électronique 30 et solidarisant celui-ci à la paroi intérieure 21.

Ce matériau de remplissage 22 est typiquement une résine, par exemple de type époxy, ou phénolique, ou vinylester ou encore polyvinylique.

L'invention porte également sur un dispositif d'identification et de suivi des produits laminés munis d'un organe électronique d'identification tel que celui décrit ci-dessus.

Ce dispositif 40 comprend une unité informatique 41 de gestion des informations d'identification, et une unité de lecture 42 communiquant avec l'unité informatique 41 et avec le dispositif de transmission 32 de l'organe électronique 30.

L'unité de lecture 42 est apte à consulter les informations d'identification stockées dans la mémoire 31 et à les transmettre à l'unité informatique 41. Pour ce faire, elle interroge le dispositif électronique 30 en envoyant un signal au dispositif de transmission 32, celui-ci transmettant les informations d'identification stockées dans la mémoire 31 à l'unité de lecture 42.

L'unité de lecture 42 est également apte à transmettre à l'organe électronique 30 les informations d'identification gérées par l'unité informatique 41, pour écriture dans la mémoire 31, par l'intermédiaire du dispositif de transmission 32.

L'unité informatique 41 est un micro-ordinateur , équipé d'un logiciel de gestion de bases de données.

Ce logiciel est programmé de façon à présenter à l'utilisateur du dispositif des masques de saisie prédéterminés, comprenant des champs correspondant aux informations d'identification stockées dans la mémoire 31.

Les informations se présentant sous forme d'un code alphanumérique sont stockées sous cette forme dans la mémoire 31. Ces informations sont typiquement : numéro de série du produit, référence de la commande, référence du certificat matière, référence des spécifications techniques du produit, référence du certificat de conformité, date de fabrication, référence du bordereau de livraison, date de livraison.

D'autres informations sont stockées dans la mémoire 31 sous forme codée, car elles occuperaient trop de place dans la mémoire 31 dans leur forme habituelle ou parce qu'elles se présentent sous des formes peu adaptées. Ces informations sont typiquement : identification du fabricant du produit, type de produit, identification du client, identification de la matière constituant le produit et référence de la norme applicable à la fabrication du produit.

L'unité informatique 41 effectue le codage et le décodage des informations d'identification stockées sous forme codée dans la mémoire 31.

Le codage et le décodage sont effectués à l'aide de tables inclues dans le logiciel, mettant en correspondance l'information à coder et un code alphanumérique à stocker dans la mémoire.

L'unité de lecture 42 est portable, légère, de petite taille, et peut être transportée facilement par un utilisateur.

Cette unité comprend une mémoire tampon de stockage des informations d'identification, un écran de visualisation 421, et un dispositif de commande 422.

La mémoire tampon permet de stocker temporairement les informations d'identification lues dans la mémoire 31 de l'organe électronique 30, ou les informations d'identification à écrire dans la mémoire 31 de l'organe électronique 30.

L'écran 421 permet de visualiser certaines des informations d'identification, et d'afficher des paramètres concernant le fonctionnement de l'unité de lecture 42.

Le dispositif de commande 422 est de préférence un clavier, et permet de déclencher la lecture des informations d'identification dans la mémoire 31 de l'organe électronique 30, l'écriture de ces informations dans la mémoire 31 et le verrouillage en écriture de l'organe électronique 30.

L'unité de lecture 42 communique à distance, sans liaison filaire, avec l'organe électronique 30, comme le montre la figure 3B.

Les informations sont transmises entre l'unité de lecture 42 et l'organe électronique 30 par ondes ou par des moyens optiques. A cet effet, l'unité de lecture 42 comprend des moyens de transmission coopérant avec le dispositif de transmission 32 de l'organe électronique 30.

Dans une variante de réalisation, l'unité de lecture 42 et l'organe électronique 30 peuvent communiquer par fibres optiques.

La portée de la transmission est courte, ce qui limite les interférences avec d'autres systèmes électroniques environnants. L'unité de lecture 42 doit être disposée à une distance de un à dix centimètres de l'organe électronique 30 pendant les communications.

L'unité de lecture 42 communique avec l'unité informatique 41, par exemple par une liaison filaire amovible. A cet effet, le dispositif d'identification 40 comprend un câble 43 de type RS232, l'unité de lecture 42 et l'unité informatique 41 comprenant des ports de type RS232 respectifs auxquelles les extrémités du câble 43 sont raccordées par des fiches adaptées. L'unité de lecture 42 peut également communiquer avec l'unité informatique 41 par une liaison optique ou tout autre type de liaison adapté.

Cette liaison filaire assure le transfert des informations d'identification entre la mémoire tampon de l'unité de lecture 42 et l'unité informatique 41.

La procédure de « marquage » d'identification d'un produit laminé est la suivante.
1/ Introduction de l'organe électronique 30 dans le logement 20 du produit.
2/ Remplissage du logement 20 avec le matériau de remplissage 22, durcissement.
3/ Introduction par un utilisateur des informations d'identification dans la base de données de l'unité informatique 41, en renseignant les différentes rubriques du masque prévu dans ce but.
4/ Raccordement de l'unité de lecture 42 à l'unité informatique 41, par branchement du câble de liaison 43 dans les ports correspondants de ces unités.
5/ Codage de certaines informations d'identification par l'unité informatique 41, et transfert de l'ensemble des informations d'identification dans la mémoire tampon de l'unité de lecture 42.
6/ Déconnexion du câble de liaison 43.
7/ Transfert manuel par l'utilisateur de l'unité de lecture 42 à proximité du produit.
8/ Transfert des informations d'identification de la mémoire tampon de l'unité de lecture 42 dans l'organe électronique 30 et écriture des informations dans la mémoire 31, sur commande de l'utilisateur.
9/ Verrouillage en écriture de l'organe électronique 30, sur commande de l'utilisateur.

La procédure de lecture des informations d'identification est la suivante.
1/ Transfert manuel par l'utilisateur de l'unité de lecture 42 à proximité du produit.
2/ Lecture des informations d'identification dans la mémoire 31 de l'organe électronique 30, sur commande de l'utilisateur, et transfert des informations dans la mémoire tampon de l'unité de lecture 41.
3/ Transfert manuel par l'utilisateur de l'unité de lecture 42 à proximité de l'unité informatique 41.
4/ Raccordement de l'unité de lecture 42 à l'unité informatique 41, par branchement du câble de liaison 43 dans les ports correspondants de ces unités.
5/ Transfert des informations d'identification de la mémoire tampon de l'unité de lecture 42 dans l'unité informatique 41, sur commande de l'utilisateur à partir de l'unité informatique 41.
6/ Décodage des informations d'identification codées, par l'unité informatique 41.
7/ Visualisation des informations d'identification par l'utilisateur à l'aide des masques prévus dans la base de données.

Le produit peut être fabriqué avec des feuilles 11 en matériau métallique ou composite. Dans le cas où les feuilles 11 sont métalliques, des précautions particulières doivent être prises pour garantir la qualité de la communication entre l'organe électronique 30 et l'unité de lecture 42.

L'antenne 321 du dispositif de transmission 32 de l'organe électronique 30 est dans ce cas disposé à proximité immédiate de l'extrémité ouverte 23 du logement 20. Par ailleurs, le diamètre intérieur du logement 20 est choisi suffisamment grand relativement au diamètre extérieur de l'enveloppe 33 de l'organe électronique 30. Un écartement minimum, par exemple de 0,5 millimètre, est maintenu entre l'organe électronique 30 et la paroi intérieure 21 du logement 20.

Dans une variante de réalisation, l'organe électronique 30 peut comprendre des moyens de mesure de la température ambiante, de la pression s'exerçant sur le produit, des vibrations ou de l'irradiation. Les résultats de mesure sont transmis par le dispositif de transmission 32 à l'unité de lecture 42, qui les transmet à son tour à l'unité informatique 41.

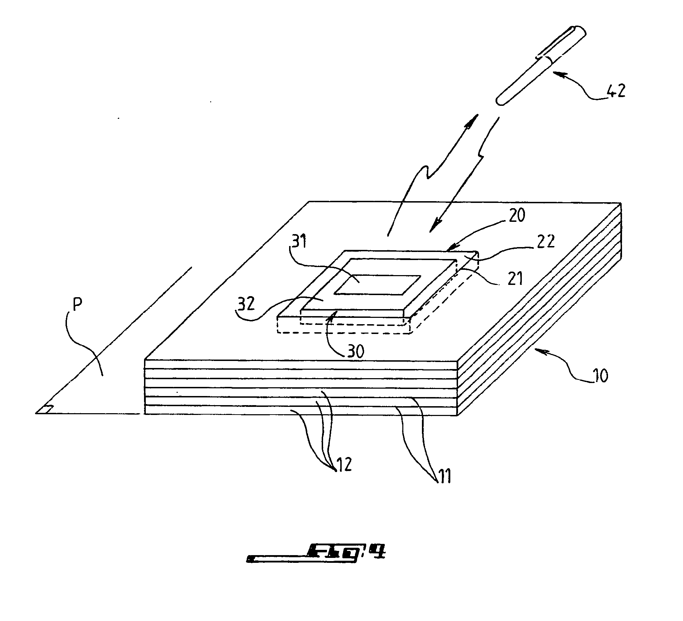

Un second mode de réalisation de l'invention est représenté sur la figure 4. Seules les différences par rapport au premier mode de réalisation seront décrites ci-dessous, les éléments identiques ou ayant la même fonction dans les deux modes de réalisation gardant la même référence.

L'organe électronique d'identification 30 présente dans le second mode de réalisation une très faible épaisseur, la mémoire 31 présentant une capacité de stockage limitée relativement au premier mode de réalisation, mais suffisante pour stocker les informations d'identification essentielles, les autres informations étant stockées sur un support externe.

Ainsi, l'organe électronique d'identification 30 présente une épaisseur inférieure à 200 microns, de préférence inférieure à 150 microns.

L'organe électronique d'identification 30 se présente sous la forme d'un parallélépipède rectangle, de section inférieure à 2,5 millimètres carrés dans un plan perpendiculaire à l'épaisseur. Cette section est typiquement une section carrée, de 1,3 millimètre de côté.

L'organe électronique d'identification 30 comprend une puce de silicone de taille correspondant approximativement à celle de l'organe 30, portant sur une de ses deux grandes faces une antenne constituant le dispositif de transmission 32. L'antenne 32 est constituée d'un microfil métallique enroulé en spirale sur la grande face de la puce, de telle sorte que cette antenne présente une épaisseur de 20 microns seulement. Le pas de l'enroulement est de 10 microns environ. Une très fine couche de polyamide protège l'antenne des chocs mécaniques. L'organe 30 fonctionne à une fréquence de 15,56 MHz environ.

La mémoire 31 présente une capacité supérieure ou égale à 64 bits. Elle ne contient généralement que le numéro de série du produit. Les autres informations d'identification du produit peuvent être consultées dans le dossier d'assurance qualité associé au produit ou sont stockées sous forme numérique dans une mémoire externe, par exemple un CD-ROM.

La connaissance du numéro de série du produit permet de trouver le dossier ou d'accéder aux informations stockées dans la mémoire externe.

L'organe électronique 30 est utilisable en lecture seule. Le numéro de série du produit est inscrit dans la mémoire 31 à l'aide d'un dispositif spécial, connu en lui-même, avant que l'organe électronique 30 soit disposé et fixé dans le logement 20.

Le logement 20 dans lequel est disposé l'organe électronique 30 présente une forme correspondante à la forme de cet organe, c'est-à-dire parallélépipédique.

Le logement 20 est creusé sur une face supérieure ou inférieure du produit. Il s'étend parallèlement au plan P, de telle sorte que le produit ne soit creusé que sur une très faible épaisseur, correspondant à l'épaisseur de l'organe électronique 30.

Comme dans le premier mode de réalisation, l'organe électronique 30 est fixé dans le logement 20 par de la résine époxy.

La face de l'organe électronique 30 portant l'antenne 32 est disposée du côté ouvert du logement 20.

Les informations d'identification stockées dans la mémoire 31 sont lues à l'aide d'une unité de lecture 42 connue en soi, se présentant sous la forme d'un stylo.

Ce stylo comprend une mémoire tampon dans laquelle est stocké le numéro de série lu dans la mémoire 31 de l'organe électronique.

Ce numéro est visualisé directement sur un organe d'affichage du stylo. Dans une variante de réalisation, ce numéro est visualisé en utilisant un lecteur connu en soi auquel le stylo est relié.

Dans une variante de réalisation non représentée, le logement 20 n'est pas creusé dans la face supérieure ou dans la face inférieure du produit mais dans une face latérale.

On comprend donc bien que l'invention permet d'identifier les produits laminés de façon fiable, durable, sans risque de perte d'informations au moment où les couches supérieures ou inférieures du produit sont pelées pour en ajuster l'épaisseur.

Dans le premier mode de réalisation de l'invention, un grand nombre d'informations peut être stocké dans l'organe électronique, et donc être physiquement associé en permanence au produit laminé, ce qui n'était pas possible précédemment.

Ces informations restent lisibles et accessibles en permanence, même une fois le produit inséré dans un ensemble mécanique.

En revanche, ce mode de réalisation ne peut être utilisé que pour des produits présentant une épaisseur suffisante.

Le second mode de réalisation de l'invention est adapté au contraire à des produits laminés de faible épaisseur, du fait de l'extrême minceur de l'organe électronique. En contrepartie, un nombre plus réduit d'informations d'identification peut être mémorisé.

Bien entendu, les exemples de réalisations cités ici ne sont pas limitatifs, et on comprend bien qu'il est possible de choisir le type et la taille de l'organe d'identification en fonction de l'épaisseur du produit laminé, de façon à obtenir le meilleur compromis capacité mémoire/encombrement. En tout état de cause, des produits laminés équipés d'organes d'identifications alliant une grande capacité de stockage et une épaisseur très faible entrent également dans le champs couvert par l'invention.

Par ailleurs, le moyen d'identification de l'invention est inviolable et infalsifiable. D'abord parce que les organes électroniques ne peuvent pas être extraits des logements quand le matériau de remplissage a été coulé. Il faudrait pour cela détruire la cale ou l'organe électronique lui-même. Ensuite parce que les organes électroniques peuvent être verrouillés en écriture ou ne sont utilisables qu'en lecture seule.

Les fraudes sur l'origine des produits laminés sont donc rendu beaucoup plus difficiles, voire même impossibles pour le premier mode de réalisation puisque toutes les données permettant l'identification du produit sont accessibles en permanence et sont infalsifiables.

On notera que les produits laminés décrits ci-dessus sont bien adaptés pour servir de cales pelables pour rattraper les jeux d'ensembles mécaniques, particulièrement dans l'industrie aéronautique où toutes les pièces font l'objet d'un suivi et d'un contrôle qualité très poussé.

## Revendications

1. Produit laminé présentant une épaisseur réglable par délitage, ce produit comprenant un empilement (10) alterné de feuilles (11) et de couches (12) d'un matériau adhésif, chaque feuille (11) présentant une résistance intrinsèque au déchirement, et chaque couche (12) de matériau adhésif reliant l'une à l'autre deux feuilles (11) adjacentes de l'empilement (10) par une force de liaison plus faible que la résistance des feuilles (11) au déchirement, ce dont il résulte que chaque feuille (11) peut être détachée de l'empilement (10) sans se déchirer, **caractérisé en ce que** le produit comprend un logement (20) ménagé dans l'épaisseur de l'empilement (10), et un organe électronique d'identification (30) disposé dans le logement (20).

2. Produit suivant la revendication 1, **caractérisé en ce que** l'organe électronique (30) comprend une mémoire (31) de stockage d'informations d'identification identifiant ou caractérisant le produit, et un dispositif de transmission (32) interrogeable à distance apte à transmettre les informations d'identification stockées dans la mémoire (31).

3. Produit suivant la revendication 2, **caractérisé en ce que** les informations d'identification stockées dans la mémoire (31) comprennent au moins le numéro de série du produit.

4. Produit suivant l'une quelconque des revendications 2 à 3, **caractérisé en ce que** la mémoire (31) présente une grande capacité de stockage, suffisante pour stocker au moins une grande partie des informations d'identification, telles que : identification du fabricant du produit, type de produit, référence de la commande, identification du client, identification de la matière constituant le produit et référence du certificat matière, référence de la norme applicable à la fabrication du produit, référence des spécifications techniques du produit, référence du certificat de conformité, date de fabrication, référence du bordereau de livraison, date de livraison.

5. Produit suivant la revendication 4, **caractérisé en ce que** la mémoire (31) présente une capacité de stockage d'au moins 512 bits.

6. Produit suivant la revendication 4 ou 5, **caractérisé en ce que** certaines des informations d'identification sont stockées dans la mémoire (31) sous forme codée.

7. Produit suivant l'une quelconque des revendications 4 à 6, **caractérisé en ce que** le dispositif de transmission (32) est apte à recevoir à distance des informations d'identification et à les inscrire dans la mémoire (31).

8. Produit suivant la revendication 7, **caractérisé en ce que** l'organe électronique (30) est verrouillable en écriture.

9. Produit suivant l'une quelconque des revendications 4 à 8, **caractérisé en ce que** l'organe électronique (30) présente la forme générale d'un cylindre de diamètre extérieur inférieur à 4 millimètres.

10. Produit suivant l'une quelconque des revendications 4 à 9, **caractérisé en ce que** l'organe électronique (30) comprend des moyens de mesure de la température et/ou de la pression et/ou des vibrations et/ou de l'irradiation, le dispositif de transmission (32) étant apte à transmettre les résultats des mesures faites par lesdits moyens.

11. Produit suivant l'une quelconque des revendications 2 à 3, **caractérisé en ce que** l'organe électronique d'identification (30) présente une très faible épaisseur, la mémoire (31) présentant une capacité de stockage suffisante pour stocker les informations d'identification essentielles, les autres informations étant stockées sur un support externe.

12. Produit suivant la revendication 11, **caractérisé en ce que** l'organe électronique d'identification (30) présente une épaisseur inférieure à 200 microns.

13. Produit suivant la revendication 11 ou 12, **caractérisé en ce que** l'organe électronique d'identification (30) présente une section inférieure à 2,5 millimètres carrés.

14. Produit suivant l'une quelconque des revendications 11 à 13, **caractérisé en ce que** la mémoire (31) présente une capacité supérieure à 64 bits.

15. Produit suivant l'une quelconque des revendications 11 à 14, **caractérisé en ce que** l'organe électronique (30) est utilisable en lecture seule.

16. Produit suivant l'une quelconque des revendications 1 à 15, **caractérisé en ce que** le logement (20) est délimité par une paroi intérieure (21), un matériau de remplissage (22) durcissable remplissant le logement (20) autour de l'organe électronique (30) et solidarisant celui-ci à la paroi intérieure (21).

17. Produit suivant la revendication 16, **caractérisé en ce que** le matériau de remplissage (22) est une résine, par exemple une résine époxy, phénolique, vinylester ou polyvinylique.

18. Produit suivant l'une quelconque des revendications 1 à 17, **caractérisé en ce que** les feuilles (11) sont constituées d'un matériau métallique ou composite.

19. Produit suivant l'une quelconque des revendications 1 à 18, **caractérisé en ce que** les feuilles (11) s'étendent toutes parallèlement à un plan de référence (P), le logement (20) s'étendant également parallèlement au plan de référence (P).

20. Système d'identification et de suivi de produits laminés, d'épaisseurs réglables par délitage
ces produits comprenant chacun un empilement (10) alterné de feuilles (11) et de couches (12) d'un matériau adhésif, chaque feuille (11) présentant une résistance intrinsèque au déchirement, et chaque couche (12) de matériau adhésif reliant l'une à l'autre deux feuilles (11) adjacentes de l'empilement (10) par une force de liaison plus faible que la résistance des feuilles (11) au déchirement, ce dont il résulte que chaque feuille (11) peut être détachée de l'empilement (10) sans se déchirer, **caractérisé en ce qu'**il comprend une pluralité de produits laminés comprenant chacun un logement (20) ménagé dans l'épaisseur de l'empilement (10), et un organe électronique d'identification (30) disposé dans ce logement (20), et une unité de lecture (42), l'organe électronique (30) comprenant une mémoire (31) de stockage d'informations d'identification identifiant ou caractérisant le produit, et un dispositif de transmission (32) apte à transmettre les informations d'identification stockées dans la mémoire (31), l'unité de lecture (42) communiquant avec le dispositif de transmission (32) de l'organe électronique (30) et étant apte à consulter les informations d'identification stockées dans la mémoire (31).

21. Système selon la revendication 20, **caractérisé en ce que** l'unité de lecture (42) est portable et communique à distance, sans liaison filaire, avec l'organe électronique (30).

22. Système selon l'une quelconque des revendications 20 à 21, **caractérisé en ce qu'**elle comprend une unité informatique (41) de gestion des informations d'identification, l'unité de lecture (42) étant apte à transmettre à l'unité informatique (41) les informations lues dans la mémoire (31).

23. Système selon la revendication 22, **caractérisé en ce que** l'unité de lecture (42) est apte à transmettre à l'organe électronique (30) les informations d'identification gérées par l'unité informatique (41), pour écriture dans la mémoire (31).

24. Système selon la revendication 22 ou 23, **caractérisé en ce que** l'unité informatique (41) effectue le codage et le décodage de certaines informations d'identification stockées sous forme codée dans la mémoire (31).

25. Système selon la revendication 24, **caractérisé en ce que** le codage et le décodage des informations d'identification est effectué à l'aide de tables mettant en correspondance l'information à coder et un code alphanumérique à stocker dans la mémoire (31).

26. Application d'un produit selon l'une quelconque des revendications 1 à 19 à la constitution d'une cale de réglage pelable pour des ensembles mécaniques.

## Claims

1. A laminated product having a thickness adjustable by exfoliation, the product comprising a stack (10) of alternating sheets (11) and layers (12) of an adhesive material, each sheet (11) having intrinsic tear resistance, and each layer (12) of adhesive material linking together two adjacent sheets (11) of the stack (10) by a linking force lower than the tear resistance of the sheets (11), whereby each sheet (11) can be detached from the stack (10) without tearing apart, **characterized in that** the product comprises a housing (20) arranged in the thickness of the stack (10), and an electronic identification member (30) disposed in the housing (20).

2. The product according to claim 1, **characterized in that** the electronic member (30) comprises a memory (31) for storing identification data identifying or characterizing the product, and a transmitting device (32), which can be polled remotely, adapted for transmitting the identification data stored in the memory (31).

3. The product according to claim 2, **characterized in that** the identification data stored in the memory (31) comprises at least the serial number of the product.

4. The product according to any of claims 2 to 3, **characterized in that** the memory (31) has a large storage capacity, sufficient for storing at least a large part of the identification data, such as: identification of the product manufacturer, type of product, order number, customer identification, identification of the material composing the product and reference number of the material certificate, reference number of the standard applicable to product manufacture, reference number of technical product specifications, reference number of the certificate of conformity, date of manufacture, reference number of the delivery slip, date of delivery.

5. The product according to claim 4, **characterized in that** the memory (31) has a storage capacity of at least 512 bits.

6. The product according to claim 4 or 5, **characterized in that** some of the identification data is stored in the memory (31) in coded form.

7. The product according to any of claims 4 to 6, **characterized in that** the transmitting device (32) is adapted for remotely receiving identification data and writing it into the memory (31).

8. The product according to claim 7, **characterized in that** the electronic member (30) can be write protected.

9. The product according to any of claims 4 to 8, **characterized in that** the electronic member (30) has the general shape of a cylinder having a diameter of less than 4 millimeters.

10. The product according to any of claims 4 to 9, **characterized in that** the electronic member (30) comprises means for measuring temperature and/or pressure and/or vibrations and/or radiation, the transmitting device (32) being adapted for transmitting the results of the measurements made by said means.

11. The product according to any of claims 2 to 3, **characterized in that** the electronic identification member (30) is very thin, with the memory (31) having a storage capacity sufficient for storing essential identification data, other data being stored on an external medium.

12. The product according to claim 11, **characterized in that** the electronic identification member (30) has a thickness of less than 200 micrometers.

13. The product according to claim 11 or 12, **characterized in that** the electronic identification member (30) has a cross-section of less than 2.5 square millimeters.

14. The product according to any of claims 11 to 13, **characterized in that** the memory (31) has a capacity of more than 64 bits.

15. The product according to any of claims 11 to 14, **characterized in that** the electronic member (30) can be used in read-only mode.

16. The product according to any of claims 1 to 15, **characterized in that** the housing (20) is limited by an inner wall (21), with a curable filler (22) filling the housing (20) around the electronic member (30), and making it integral with the inner wall (21).

17. The product according to claim 16, **characterized in that** the filler (22) is a resin, e.g. an epoxy, phenolic, vinylester, or polyvinyl resin.

18. The product according to any of claims 1 to 17, **characterized in that** the sheets (11) are composed of a metallic or composite material.

19. The product according to any of claims 1 to 18, **characterized in that** the sheets (11) all extend in parallel to a reference plane (P), with the housing (20) also extending in parallel to the reference plane (P).

20. A system for identifying and tracing laminated products, the thicknesses of which are adjustable by exfoliation,
said products each comprising a stack (10) of alternating sheets (11) and layers (12) of an adhesive material, each sheet (11) having intrinsic tear resistance, and each layer (12) of adhesive material linking together two adjacent sheets (11) of the stack (10) by a linking force lower than the tear resistance of the sheets (11), whereby each sheet (11) can be detached from the stack (10) without tearing apart, **characterized in that** it comprises a plurality of laminated products each comprising a housing (20) arranged in the thickness of the stack (10), and an electronic identification member (30) disposed in the housing (20), and a reading unit (42), the electronic member (30) comprising a memory (31) for storing identification data identifying or characterizing the product, and a transmitting device (32), adapted for transmitting the identification data stored in the memory (31), the reading unit (42) communicating with the transmitting device (32) of the electronic member (30) and being adapted for looking up the identification data stored in the memory (31).

21. The system according to claim 20, **characterized in that** the reading unit (42) is portable and remotely communicates, without a wire link, with the electronic member (30).

22. The system according to any of claims 20 to 21, **characterized in that** it comprises a computer unit (41) for handling identification data, the reading unit (42) being adapted for transmitting to the computer unit (41) the data read from the memory (31).

23. The system according to claim 22, **characterized in that** the reading unit (42) is adapted for transmitting to the electronic member (30) the identification data handled by the computer unit (41) for writing into memory (31).

24. The system according to claim 22 or 23, **characterized in that** the computer unit (41) performs coding and decoding of certain identification data stored in coded form in the memory (31).

25. The system according to claim 24, **characterized in that** the coding and decoding of the identification data is performed by means of tables matching the data to be coded and an alphanumerical code to be stored in the memory (31).

26. An application of a product according to any of claims 1 to 19 to the composition of a peelable adjusting shim for mechanical assemblies.

## Patentansprüche

1. Laminiertes Produkt mit durch Abblättern einstellbarer Dicke, wobei das Produkt einen Stapel (10) abwechselnder Bögen (11) und Schichten (12) eines Klebematerials aufweist, wobei jeder Bogen (11) eine eigene Reißfestigkeit aufweist, und jede Schicht (12) des Klebematerials zwei nebeneinander liegende Bögen (11) des Stapels (10) durch eine Verbindungskraft miteinander verbindet, die geringer ist als die Reißfestigkeit der Bögen (11), wodurch jeder Bogen (11) von dem Stapel (10) gelöst werden kann, ohne zu zerreißen, **dadurch gekennzeichnet, dass** das Produkt eine Aufnahme (20), die in der Dicke des Stapels (10) eingerichtet ist, und ein elektronisches Identifizierungsorgan (30), das in der Aufnahme (20) angeordnet ist, umfasst.

2. Produkt nach Anspruch 1, **dadurch gekennzeichnet, dass** das elektronische Organ (30) einen Speicher (31) zum Speichern von Identifizierungsdaten, die das Produkt identifizieren bzw. kennzeichnen, und eine Sendevorrichtung (32), die auf Distanz abgefragt werden kann und dazu geeignet ist, die in dem Speicher (31) abgelegten Identifizierungsdaten zu senden, umfasst.

3. Produkt nach Anspruch 2, **dadurch gekennzeichnet, dass** die in dem Speicher (31) abgelegten Identifizierungsdaten mindestens die Seriennummer des Produkts umfassen.

4. Produkt nach einem der Ansprüche 2 bis 3, **dadurch gekennzeichnet, dass** der Speicher (31) eine große Speicherkapazität hat, die ausreicht, um mindestens einen Großteil der Identifizierungsdaten zu speichern, wie etwa: die Identifizierung des Produktherstellers, den Produkttyp, die Bestellnummer, die Identifizierung des Kunden, die Identifizierung des Materials, aus dem das Produkt besteht, und die Referenz der Materialbescheinigung, die Referenz der Norm, die auf die Produktherstellung anwendbar ist, die Referenz der technischen Angaben des Produkts, die Referenz der Konformitätsbescheinigung, das Herstellungsdatum, die Referenz des Lieferscheins, das Lieferdatum.

5. Produkt nach Anspruch 4, **dadurch gekennzeichnet, dass** der Speicher (31) eine Speicherkapazität von mindestens 512 Bit aufweist.

6. Produkt nach Anspruch 4 oder 5, **dadurch gekennzeichnet, dass** ein Teil der Identifizierungsdaten in dem Speicher (31) codiert abgelegt ist.

7. Produkt nach einem der Ansprüche 4 bis 6, **dadurch gekennzeichnet, dass** die Sendevorrichtung (32) geeignet ist, um auf Distanz Identifizierungsdaten zu empfangen und sie in den Speicher (31) zu schreiben.

8. Produkt nach Anspruch 7, **dadurch gekennzeichnet, dass** das elektronische Organ (30) schreibgeschützt werden kann.

9. Produkt nach einem der Ansprüche 4 bis 8, **dadurch gekennzeichnet, dass** das elektronische Organ (30) die allgemeine Form eines Zylinders aufweist, der einen Durchmesser von weniger als 4 Millimetern hat.

10. Produkt nach einem der Ansprüche 4 bis 9, **dadurch gekennzeichnet, dass** das elektronische Organ (30) Mittel umfasst zum Messen der Temperatur und/oder des Drucks und/oder von Vibrationen und/oder von Strahlung, wobei die Sendevorrichtung (32) geeignet ist, um die Ergebnisse der von den Mitteln vorgenommenen Messungen zu übertragen.

11. Produkt nach einem der Ansprüche 2 bis 3, **dadurch gekennzeichnet, dass** das elektronische Identifizierungsorgan (30) eine sehr geringe Dicke aufweist, wobei der Speicher (31) eine Speicherkapazität aufweist, die ausreicht, um die wesentlichen Identifizierungsdaten zu speichern, wobei die anderen Daten auf einem externen Träger gespeichert werden.

12. Produkt nach Anspruch 11, **dadurch gekennzeichnet, dass** das elektronische Identifizierungsorgan (30) eine Dicke von weniger als 200 Mikrometern aufweist.

13. Produkt nach Anspruch 11 oder 12, **dadurch gekennzeichnet, dass** das elektronische Identifizierungsorgan (30) einen Querschnitt von weniger als 2,5 Quadratmillimetern aufweist.

14. Produkt nach einem der Ansprüche 11 bis 13, **dadurch gekennzeichnet, dass** der Speicher (31) eine Kapazität von mehr als 64 Bit aufweist.

15. Produkt nach einem der Ansprüche 11 bis 14, **dadurch gekennzeichnet, dass** das elektronische Organ (30) im Nur-Lese-Modus verwendbar ist.

16. Produkt nach einem der Ansprüche 1 bis 15, **dadurch gekennzeichnet, dass** die Aufnahme (20) von einer Innenwand (21) begrenzt wird, wobei ein härtbarer Füllstoff (22) die Aufnahme (20) um das elektronische Organ (30) herum füllt und es mit der Innenwand (21) einstückig macht.

17. Produkt nach Anspruch 16, **dadurch gekennzeichnet, dass** der Füllstoff (22) ein Harz, z.B. ein Epoxid-, Phenol-, Vinylester- oder Polyvinylharz, ist.

18. Produkt nach einem der Ansprüche 1 bis 17, **dadurch gekennzeichnet, dass** die Bögen (11) aus einem Metall- oder Verbundmaterial bestehen.

19. Produkt nach einem der Ansprüche 1 bis 18, **dadurch gekennzeichnet, dass** die Bögen (11) sich alle parallel zu einer Bezugsebene (P) erstrecken, wobei sich die Aufnahme (20) auch parallel zu dieser Bezugsebene (P) erstreckt.

20. System zum Identifizieren und Nachverfolgen von laminierten Produkten, deren Dicken durch Abblättern einstellbar sind,
wobei diese Produkte jeweils einen Stapel (10) von abwechselnden Bögen (11) und Schichten (12) eines Klebematerials umfassen, wobei jeder Bogen (11) eine eigene Reißfestigkeit aufweist, und jede Schicht (12) des Klebematerials zwei nebeneinanderliegende Bögen (11) des Stapels (10) durch eine Verbindungskraft miteinander verbindet, die geringer ist als die Reißfestigkeit der Bögen (11), wodurch jeder Bogen (11) von dem Stapel (10) gelöst werden kann, ohne zu zerreißen, **dadurch gekennzeichnet, dass** es eine Vielzahl von laminierten Produkten umfasst, die jeweils eine Aufnahme (20), die in der Dicke des Stapels (10) eingerichtet ist, und ein elektronisches Identifizierungsorgan (30), das in der Aufnahme (20) angeordnet ist, und eine Leseeinheit (42) umfassen, wobei das elektronische Organ (30) einen Speicher (31), um Identifizierungsdaten zu speichern, die das Produkt identifizieren bzw. kennzeichnen, und eine Sendevorrichtung (32), die dazu geeignet ist, die in dem Speicher (31) abgelegten Identifizierungsdaten zu senden, umfasst, wobei die Leseeinheit (42) mit der Sendevorrichtung (32) des elektronischen Organs (30) in Verbindung steht und dazu geeignet ist, die Identifizierungsdaten abzufragen, die in dem Speicher (31) abgelegt sind.

21. System nach Anspruch 20, **dadurch gekennzeichnet, dass** die Leseeinheit (42) tragbar ist und auf Distanz, ohne Kabelverbindung mit dem elektronischen Organ (30) in Verbindung steht.

22. System nach einem der Ansprüche 20 bis 21, **dadurch gekennzeichnet, dass** es eine Computereinheit (41) umfasst, um die Identifizierungsdaten zu handhaben, wobei die Leseeinheit (42) geeignet ist, um die aus dem Speicher (31) gelesenen Daten an die Computereinheit (41) zu übertragen.

23. System nach Anspruch 22, **dadurch gekennzeichnet, dass** die Leseeinheit (42) geeignet ist, um an das elektronische Organ (30) die Identifizierungsdaten zu übertragen, die von der Computereinheit (41) gehandhabt werden, damit sie in den Speicher (31) geschrieben werden.

24. System nach Anspruch 22 oder 23, **dadurch gekennzeichnet, dass** die Computereinheit (41) das Codieren und Decodieren von bestimmten Identifizierungsdaten ausführt, die in codierter Form im Speicher (31) abgelegt sind.

25. System nach Anspruch 24, **dadurch gekennzeichnet, dass** das Codieren und Decodieren der Identifizierungsdaten mittels Tabellen erfolgt, welche die zu codierenden Daten und einen im Speicher (31) abzulegenden alphanummerischen Code abgleichen.

26. Anwendung eines Produkts nach einem der Ansprüche 1 bis 19 auf den Aufbau eines abziehbaren Treibkeils für mechanische Anordnungen.
